(19) Europäisches Patentamt
European Patent Office
Office européen des brevets

(11) **EP 2 559 332 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**13.01.2021 Patentblatt 2021/02**

(51) Int Cl.:
***A01C 23/00*** *(2006.01)*     ***A01M 7/00*** *(2006.01)*

(45) Hinweis auf die Patenterteilung:
**10.12.2014 Patentblatt 2014/50**

(21) Anmeldenummer: **12401167.7**

(22) Anmeldetag: **08.08.2012**

(54) **Landwirtschaftliche Verteilmaschine**

Agricultural distributor

Machine de répartition agricole

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.08.2011 DE 102011052705**

(43) Veröffentlichungstag der Anmeldung:
**20.02.2013 Patentblatt 2013/08**

(73) Patentinhaber: **Amazonen-Werke H. Dreyer GmbH & Co. KG 49205 Hasbergen (DE)**

(72) Erfinder:
• **Kühn, Christoph 49824 Ringe (DE)**
• **Wernsmann, Daniel 49074 Osnabrück (DE)**
• **Ehlen, Volker 49205 Hasbergen (DE)**
• **Rahe, Florian 49504 Lotte (DE)**

(74) Vertreter: **Grünecker Patent- und Rechtsanwälte PartG mbB Leopoldstraße 4 80802 München (DE)**

(56) Entgegenhaltungen:
EP-A1- 0 922 385     EP-A1- 2 526 755
EP-A1- 2 526 756     EP-A2- 0 077 270
EP-A2- 1 716 754     EP-A2- 2 042 276
EP-A2- 2 064 948     WO-A1-2008/098290
WO-A1-2012/146255     DE-U1-202007 011 631
US-A- 5 928 309     US-A1- 2006 142 936

EP 2 559 332 B2

## Beschreibung

Die Erfindung betrifft eine landwirtschaftliche Verteilmaschine gemäß des Oberbegriffes des Patentanspruches 1.

Eine derartige landwirtschaftliche Verteilmaschine ist durch die DE 10 2007 025 751 A1 bekannt. Bei dieser Verteilmaschine soll das Verteilergestänge durch kompensieren der Übertragung der Rahmenbewegung auf das Verteilergestänge durch geeignete Aktoren in einer möglichst ruhigen Lage gehalten werden, wobei Sensoren die Bewegung des Rahmens erfassen und an eine elektronische Regeleinrichtung übermitteln, die dann die Aktoren ansteuern. Hierbei werden jedoch keine durch Kurvenfahrt hervorgerufene Beschleunigungen, die Einfluss auf die Gestängebewegung haben, berücksichtigt. Bei Kurvenfahrt hat das Gestänge das nachteilige Bestreben in der Regel sich auf der kurveninneren Seite nach unten zuneigen.

Der Erfindung liegt die Aufgabe zu Grunde, auf einfache Weise Daten ermitteln zu können, um bei Kurvenfahrt oder beim Wendevorgang ein nachteiliges Auslenken des Verteilergestänges zu vermeiden.

Diese Aufgabe wird erfindungsgemäß dadurch gelöst, dass der Betriebsdaten ermittelnde Sensor als Drehratensensor ausgebildet ist, dass auf der Grundlage der von dem Drehratensensor ermittelten Messdaten das Dämpfungselement und/oder der Aktor zur Beeinflussung der Lage des Verteilergestänges ansteuerbar und/oder einstellbar sind, und zwar derart, dass den bei Kurvenfahrt und/oder Wendevorgang auf das Verteilergestänge einwirkenden Kräften entgegengewirkt wird.

Infolge dieser Maßnahmen lässt sich mittels des Drehratensensors während einer Kurvenfahrt oder beim Wendevorgang die Zentrifugalbeschleunigung ermitteln. Dies geschieht dadurch, dass anhand der von dem Drehratensensor ermittelten Drehgeschwindigkeit und der tatsächlichen Fahrgeschwindigkeit die Zentrifugalbeschleunigung berechnet wird. Anhand der ermittelten Zentrifugalbeschleunigung wird über die Regeleinrichtung eine Anpassung der Gestängeregelung vorgenommen. Dies geschieht bevor das Gestänge durch die Zentrifugalbeschleunigung aus der Sollposition ausgelenkt wird.

Mit Hilfe der Daten des Drehratensensors und der Fahrgeschwindigkeit des Fahrzeugs wird die auf das Fahrzeug wirkende Zentrifugalbeschleunigung ermittelt und anhand dieser Beschleunigung die auf das Verteilergestänge einwirkenden Kräfte bei einer Kurvenfahrt berechnet. Diese berechneten Daten dienen als Grundlage zu Ansteuerung der Aktoren, um das Verteilergestänge in der gewünschten Lage zu halten.

Aufgrund der erfindungsgemäßen Erfassung der Zentrifugalbeschleunigung und der daraus über die Regeleinrichtung abgeleiteten Einstelldaten wird erreicht, dass entsprechend dieser hinterlegten Daten das Dämpfungselement und/oder der Aktor zur Beeinflussung der Lage des Verteilergestänges von der Regeleinrichtung ansteuerbar ist und zwar derart, dass eine möglichst ruhige Gestängelage des Verteilergestänges bei Kurvenfahrt und/oder Wendevorgang erreichbar ist.

Weitere Einzelheiten der Erfindung sind der Beispielsbeschreibung und den Zeichnungen zu entnehmen. Hierbei zeigen

Fig. 1   eine als gezogene Feldspritze mit Verteilergestänge ausgebildete landwirtschaftliche Verteilmaschine in schematischer und perspektivischer Darstellung,

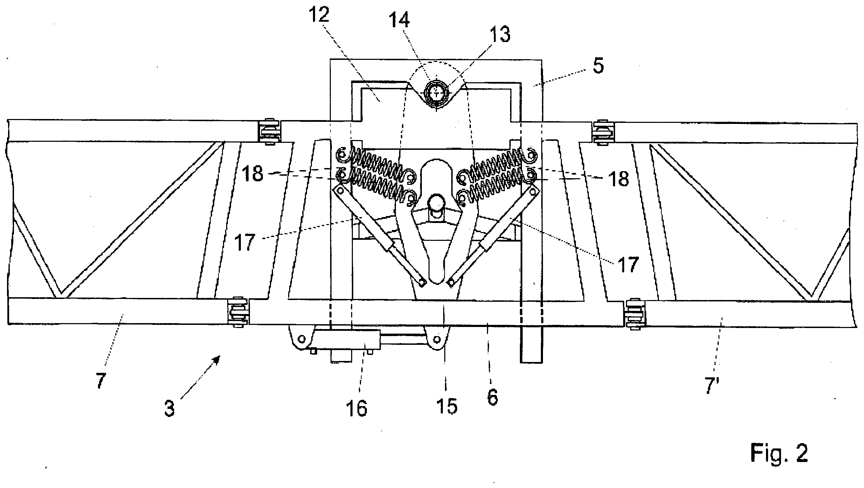

Fig. 2   der mittlere Bereich des Verteilergestänges mit der Aufhängungsvorrichtung des Verteilergestänges am Rahmen der Verteilmaschine in der Ansicht von hinten, in schematischer Darstellung und Teilansicht,

Fig. 3   die von einem Ackerschlepper gezogene Feldspritze mit sich Arbeitsstellung befindlichem Verteilergestänge während der Kurvenfahrt und den auf das Gestänge einwirkenden Kräften in Draufsicht und in Prinzipdarstellung und

Fig. 4   das Verteilergestänge in der Situation gemäß Fig. 3 in Rückansicht und mit den auf das Gestänge einwirkenden Kräften in Prinzipdarstellung.

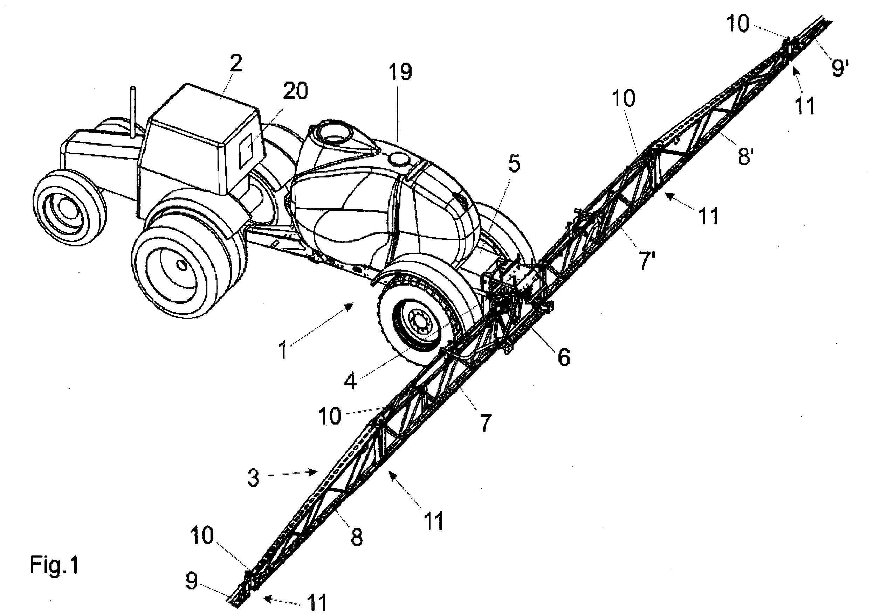

Die als gezogene landwirtschaftliche Feldspritze 1 ausgebildete landwirtschaftliche Verteilmaschine ist über eine Anhängevorrichtung an einen Ackerschlepper 2 angekoppelt. Die Feldspritze 1 weist auf ihrer Rückseite ein Verteilergestänge 3 auf, welches über eine Kuppeleinrichtung 4 an dem rückwärtigen Ende des Rahmens 5 der Feldspritze 1 in Höhenrichtung verstellbar angeordnet ist. Das Verteilergestänge 3 besteht aus einem mittleren Gestängeabschnitt 6 und mehreren gelenkig miteinander verbundenen Gestängeabschnitten 7, 7', 8, 8', 9, 9'. Der jeweilige innerste Gestängeabschnitt 7, 7' ist gelenkig an dem mittleren Gestängeabschnitt 6 angeordnet. Zwischen den einzelnen zueinander einklappbaren Gestängeabschnitten 7, 7', 8, 8', 9, 9' sowie zwischen dem jeweils innersten Gestängeabschnitt 7, 7' und dem mittleren Gestängeabschnitt 6 sind motorischen Stellelemente 10, die hier als doppeltwirkende Hydraulikzylinder ausgebildet sind, zum verbringen der Gestängeabschnitte 7, 7', 8, 8', 9, 9' in eine erste Klappstellung, die der Arbeitsstellung gemäß Fig. 1 entspricht und in eine zweite Klappstellung, in der die zueinander einklappbaren Gestängeabschnitte in zusammengeklappter Weise, die der nicht dargestellten Transportstellung entspricht, angeordnet. Die einzelnen aneinander anschließenden Gestängeabschnitte 7, 7', 8, 8', 9, 9' sind über Gelenke 11 miteinander verbunden.

Der mittlere Gestängeabschnitt 6 ist über die Gelenkhalterung 12 mittels eines Gelenkbolzens 13 an dem Rahmen 5 der Feldspritze 1 in schwenkbarer Weise um die in Fahrtrichtung verlaufende Schwenkachse 14 befestigt. Weiterhin ist an dem Gelenkbolzen 13 ein Zwischenelement 15 ebenfalls schwenkbar befestigt. Zwischen dem unteren Ende des Zwischenelementes 15 und dem mittleren Gestängeabschnitt 6 ist ein als doppeltwirkender Hydraulikzylinder 16 ausgebildetes Verstellelement befestigt. Mittels des Hydraulikzylinders 16 sind das Zwischenelement 15 und das Verteilergestänge 3 in fester Weise miteinander verbunden.

Zwischen dem Rahmen 5 und dem Zwischenelement 15, und somit dem Verteilergestänge 3 sind die Aktoren 17 oder Dämpfungselemente zur Beeinflussung der Lage des Verteilergestänges 3 und die als Zugfedern 18 ausgebildeten Federelemente angeordnet.

Der landwirtschaftlichen Verteilmaschine 1 ist ein Drehratensensor 19 zugeordnet. Dieser Drehratensensor kann auch auf dem die Verteilmaschine ziehenden oder tragenden Ackerschlepper 2 angeordnet sein. Der Drehratensensor 19 übermittelt die von ihm gemessenen Daten an die elektronische Regeleinrichtung 20. In dem Speicher der elektronischen Regeleinrichtung 20 ist ein Steuerungs- und/oder Auswerteprogramm hinterlegt. Diesem Steuerungs- und/oder Auswerteprogramm werden die Daten, die der Drehratensensor 19 ermittelt, zugeführt. Auf der Grundlage der von dem Drehratensensor 19 ermittelten Messdaten werden entsprechend der von dem Steuerungs- und/oder Auswerteprogramm ermittelten Einstelldaten das Dämpfungselement und oder der Aktor 17 zur Beeinflussung der Lage des Verteilergestänges 3 angesteuert und eingestellt. Dieses erfolgt derart, dass den bei Kurvenfahrt und/oder dem Wendevorgang auf das Verteilergestänge 3 einwirkenden Kräften entgegengewirkt wird. Entsprechend der hinterlegten Daten ist das Dämpfungselement und/oder der Aktor 17 zur Beeinflussung der Lage des Verteilergestänges 3 von der Regeleinrichtung 20 ansteuerbar und zwar derart, dass eine möglichst ruhige und stabile Lage des Verteilergestänges 3 bei Kurvenfahrt und/oder dem Wendevorgang erreicht wird.

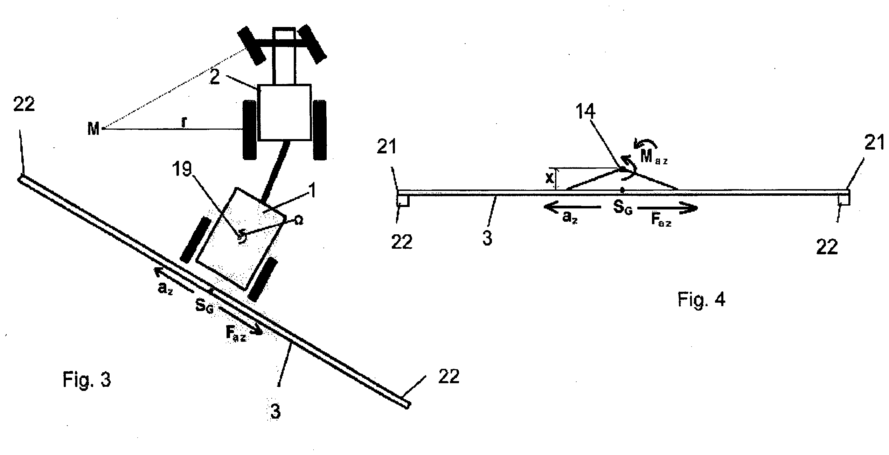

Die Ansteuerung der Dämpfungselemente und/oder des Aktors 17 aufgrund der von dem Drehratensensor 19 ermittelten Daten, die von dem in dem Speicher des Bordcomputers 20 hinterlegten Steuerungsund/oder Auswerteprogramm geschieht im Wesentlichen wie folgt, welches anhand der Fig. 3 und 4 näher erläutert wird:

Während einer Kurvenfahrt neigt sich das Gestänge 3 einer Pflanzenschutzspritze 1 aufgrund der Zentrifugalbeschleunigung, so dass die kurveninnere Seite des Gestänges 3 nach unten geneigt wird. Mit einem Drehratensensor 20 wird die Zentrifugalbeschleunigung während der Kurvenfahrt des Ackerschleppers 2 mit der Pflanzenschutzspritze 1 ermittelt und anhand dieser Größe eine Anpassung der Gestängeregelung vorgenommen und zwar bevor das Gestänge 3 durch die Zentrifugalbeschleunigung aus der Sollposition ausgelenkt wird. Durch eine entsprechende Anpassung von Dämpfern oder eine Neigungsverstellung des Gestänges 3 durch Aktoren 17, wird somit ein Neigen des Gestänges in einer Kurvenfahrt unterbunden.

Die Berechnung des gefahrenen Kreisradius (r) anhand der Drehrate (Ω) und der von einem Geschwindigkeitssensor gemessenen Fahrgeschwindigkeit (v) erfolgt nach der mathematischen Gleichung:

$$r[m] = \frac{1}{\Omega[rad/s] : v[m/s]} = \frac{v[m/s]}{\Omega[rad/s]}$$

Die Berechnung der Zentrifugalbeschleunigung (az) anhand der von dem Drehratensensor gemessenen Drehrate (Q) und dem Kreisradius (r) erfolgt nach der Gleichung:

$$a_z[m/s^2] = \Omega^2[rad/s]^2 * r[m]$$

Auf den Schwerpunkt SG des Gestänges 3 wirkt während einer Kurvenfahrt die Zentrifugalbeschleunigung aZ. Diese Beschleunigung erzeugt eine resultierende Kraft Faz die in ihrer Wirkrichtung der Beschleunigung entgegengesetzt ist. Aufgrund des Abstands x zwischen dem Schwerpunkt SG des Gestänges 3 und dem Drehpunkt 21 erzeugt die Kraft Faz ein resultierendes Moment Maz. Dieses Moment erzeugt eine Auslenkung des Gestänges 3 während einer Kurvenfahrt.

Mit Hilfe eines Drehratensensors 19 wird die Zentrifugalbeschleunigung während einer Kurvenfahrt des Ackerschleppers 2 mit der Pflanzenschutzspritze 1 ermittelt. Sind die Masse des Gestänges 3 und der Abstand zwischen dem Gestängeschwerpunkt SG und dem Drehpunkt 14 des Gestänges 3 bekannt, so wird hieraus die Größe des resultierenden Moments Maz durch das im Bordrechner 20 abgespeicherte Auswerte- und Steuerungsprogramm ermittelt. Diese Information kann für eine Steuerung und/oder Regelung genutzt werden, um die Gestängeparameter dahingehend anzupassen, dass das resultierende Moment Maz, ohne eine Auslenkung des Gestänges 3, kompensiert wird. Somit ist es möglich, Einflüsse von Kurvenfahrten von der Bewegung des Gestänges 3 zu trennen. Die Lage des Gestänges 3 zur Bodenoberfläche wird von den an den beiden Endbereichen 21 des Verteilergestänges 3 in bekannter Weise angeordneten Abstandssensoren 22, die ihre Messdaten ebenfalls an dem Bordcomputer 20 übermitteln, ermittelt.

**Patentansprüche**

1. Landwirtschaftliche Verteilmaschine mit Verteilergestänge (3) und einem sich auf einem Fahrwerk auf dem Boden abstützenden Rahmen (5) und zumindest einem Vorratsbehälter, wobei das Verteilergestänge (3) mittels einer Aufhängungsvorrichtung zumindest um eine in Fahrtrichtung zum Verteilergestänge (3) verlaufende Schwenkachse (14) bewegbar am Rahmen aufgehängt ist, wobei das Verteilergestänge (3) eine Erstreckung quer zur Fahrtrichtung aufweist, die ein Vielfaches der Transportbreite der Verteilmaschine ist, wobei die Aufhängungsvorrichtung zumindest ein zwischen dem Verteilergestänge (3) und dem Rahmen angeordnetes Dämpfungselement und/oder zumindest einem Aktor (17) zur Beeinflussung der Lage des Verteilergestänges aufweist, welches von einer elektronischen Regeleinrichtung entsprechend eines von in dem Speicher der Regeleinrichtung hinterlegten Steuerungs- und/oder Auswerteprogramms, dem Daten zumindest eines Betriebsdaten der Verteilmaschine ermittelnden Sensors zugeführt werden, ansteuerbar ist **dadurch gekennzeichnet, dass** der Betriebsdaten ermittelnde Sensor als Drehratensensor (19) zur Ermittlung der Zentrifugalbeschleunigung während einer Kurvenfahrt oder beim Wendevorgang ausgebildet und angeordnet ist, wobei der Drehratensensor (19) die Drehrate $\Omega$ der Verteilmaschine bei Kurvenfahrt misst, dass auf der Grundlage der von dem Drehratensensor (19) ermittelten Messdaten das Dämpfungselement und/oder der Aktor (17) zur Beeinflussung der Lage des Verteilergestänges (3) ansteuerbar und/oder einstellbar sind, und zwar derart, dass den bei Kurvenfahrt und/oder Wendevorgang auf das Verteilergestänge (3) einwirkenden Kräften entgegengewirkt wird, wobei anhand der von dem Drehratensensor ermittelten Drehrate $\Omega$ und der tatsächlichen Fahrgeschwindigkeit die Zentrifugalbeschleunigung berechnet und anhand der ermittelten Zentrifugalbeschleunigung über die Regeleinrichtung eine Anpassung der Gestängeregelung vorgenommen wird.

2. Landwirtschaftliche Verteilmaschine nach Anspruch 1,
**dadurch gekennzeichnet, dass**
entsprechend dieser hinterlegten Daten das Dämpfungselement und/oder der Aktor (17) zur Beeinflussung der Lage des Verteilergestänges (3) von der Regeleinrichtung (20) ansteuerbar ist und zwar derart, dass eine möglichst ruhige Gestängelage des Verteilergestänges (3) bei Kurvenfahrt und/oder Wendevorgang erreichbar ist.

**Claims**

1. Agricultural distributor comprising a distributor boom (3) and a frame (5) supported on running gear on the ground, and, at least one storage container, wherein the distributor boom (3) is suspended from the frame by means of a suspension device in such a way that it can move about at least one pivoting axis (14) running in the direction of travel to the distributor boom (2), wherein the distributor boom (3) extends transversally with respect to the direction of travel, by a multiple of the transport width of the distributor, wherein the suspension device has at least one damping element arranged between the distributor boom (3) and the frame and/or at least one actuator (17) for influencing the position of the distributor boom, which damping element can be actuated by an electronic closed-loop control device in accordance with an open-loop control and/or evaluation programme which is stored in the memory of the closed-loop control device and to which data of at least one sensor determining operating data of the distributor is fed,
**characterized in that**
the sensor determining operating data is configured and arranged as a rotational speed sensor (19) for determining the centrifugal acceleration during cornering and/or a turning process, wherein the rotational speed sensor (19) determines the rate of rotation $\Omega$ of the distributor during cornering, that the damping element and/or the actuator (17) for influencing the position of the distributor boom (3) can be actuated and/or adjusted on the basis of the measurement data determined by the rotational speed sensor (19), specifically in such a way that forces acting on the distributor boom (3) during cornering and/or a turning process are counteracted, wherein the centrifugal acceleration being calculated on the basis of the rate of rotation $\Omega$ determined by the rotation rate sensor and the actual driving speed, and an adaptation of the linkage control being carried out by means of the determined centrifugal acceleration via the closed-loop control device.

2. Agricultural distributor according to Claim 1,
**characterized in that**
the damping element and/or the actuator (17) for influencing the position of the distributor boom (3) can be actuated by the closed-loop control device (20) in accordance with this stored data, in such a way that a boom position of the distributor boom (3) which is as steady as possible can be achieved during cornering and/or a turning process.

**Revendications**

1. Machine d'épandage agricole comportant une rampe d'épandage (3) et un cadre (5) qui s'appuie sur un cadre au sol et au moins une trémie, la rampe d'épandage (3) étant suspendue au cadre de manière mobile au moyen d'un dispositif de suspension au moins autour d'un axe de pivotement (14) s'étendant dans le sens de la marche vers la rampe d'épandage (3), la rampe d'épandage (3) présentant une extension transversale au sens de la marche qui est un multiple de la largeur de transport de la machine d'épandage, dans lequel le dispositif de suspension présente au moins un élément d'amortissement et/ou au moins un actionneur (17) disposé entre la rampe d'épandage (3) et le cadre pour influencer la position de la rampe d'épandage, qui sont alimentés par un dispositif de commande électronique conformément à un programme de commande et/ou d'évaluation enregistré dans la mémoire du dispositif de commande, aux données d'au moins un capteur déterminant les données de fonctionnement de la machine d'épandage, peut être entraîné, **caractérisé en ce que** le capteur déterminant les données de fonctionnement est conçu et disposé comme un capteur de vitesse de rotation (19) pour déterminer l'accélération centrifuge en virage ou pendant le processus de rotation, le capteur de vitesse de rotation (19) mesurant la vitesse de rotation Q de la machine d'épandage en virage, **en ce que**, sur la base des données de mesure déterminées par le capteur de vitesse de rotation (19), l'élément d'amortissement et/ou l'actionneur (17) peut être entraîné et/ou réglé pour influencer la position de la rampe d'épandage (3), de telle sorte que les forces agissant sur la rampe d'épandage (3) dans les virages et/ou les tournants soient contrées, l'accélération centrifuge étant calculée sur la base de la vitesse de rotation Q déterminée par le capteur de vitesse de rotation et de la vitesse d'entraînement réelle, et une adaptation de la commande de la rampe étant effectuée au moyen de l'accélération centrifuge déterminée par l'intermédiaire du dispositif de commande.

2. Machine d'épandage agricole selon la revendication 1, **caractérisée en ce que**, selon ces données mémorisées, l'élément d'amortissement et/ou l'actionneur (17) pour influencer la position de la rampe d'épandage (3) peut être commandé par le dispositif de commande (20) de telle sorte que la position de la rampe d'épandage (3) soit aussi souple que possible dans les virages et/ou les tournants.

Fig.1

Fig. 2

EP 2 559 332 B2

Fig. 3

Fig. 4

EP 2 559 332 B2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007025751 A1